# EUROPEAN PATENT APPLICATION

(11) **EP 4 556 347 A1**
(43) Date of publication of application: **21.05.2025**
(21) Application number: 25155164.4
(22) Date of filing: 08.12.2022
(51) Int. Cl.: B62B 3/10, B62B 5/00, B62B 5/04

(54) **DECORATIVE ARTICLE DELIVERY DEVICE**

(30) Priority: 08.12.2021 US 202163265129 P
(62) Divisional of application: 22844410.5
(71) Applicant: Shaw Industries Group, Inc., Dalton, GA 30720 (US)
(72) Inventor: JOHNSON, Ronald Wayne, Dalton, 30720 (US); CAHILL, Christopher Edwin, Calhoun, 30701 (US); TANKERSLEY, Adam Drew, Dalton, 30720 (US)
(74) Representative: Haseltine Lake Kempner LLP

(57) **Abstract**

A selectively driven delivery device for conveyance and off-loading of decorative articles in rolled form.

## Description

### CROSS-REFERENCE TO RELATED APPLICATION

This application claims priority to pending U.S. Provisional Patent Application No. 63/265,129, filed December 8, 2021, the entirety of which is incorporated by reference.

### BACKGROUND

Decorative articles can be manufactured in rolls of significant length, diameter, and weight. For example, a typical roll of a decorative article may be up to fifteen feet in length, one or more feet in diameter and roughly up to twelve hundred pounds in weight. As such, manipulation of such decorative article rolls is a challenge, particularly in environments that are not optimal for movement of heavy, bulky articles. For example, the materials must be off-loaded from vehicles onto a parking lot or open field where specialized transport equipment is not present or cannot be easily maneuvered.

### BRIEF SUMMARY

The presently disclosed systems and methods pertain to the conveyance of bulky, weighty materials, such as rolled decorative articles. In particular, disclosed is a delivery device having at least one, or two self-powered, driven casters. In one aspect, the driven casters have motors associated therewith.

In another aspect, the present disclosure pertains to a decorative article delivery device that comprises a planar, rectangular bed having first and second ends; two passive casters mechanically attached to the underside of the bed at the first end thereof, each of the passive casters configured to be freely rotatable about a respective vertical axis; two driven casters mechanically attached to the underside of the bed at the second end thereof, each of the driven casters configured to not rotate about a respective vertical axis; two electric motor units, each in communication with a respective one of the two driven casters, for selectively driving the respective caster in response to a control signal; a control handle mechanically communicating with the bed and being in electrical communication with the two electric motor units for selectively conveying the control signal thereto; a cradle in mechanical communication with the bed for receiving the decorative article roll therein, the cradle comprising a frusto-cylindrical member having an arcuate portion disposed proximate the bed and first and second upwardly curving side portions, the first side portion being pivotally connected to the bed along a lateral pivot; and an off-loading lever mechanically connected to the bed via a lateral pivot for selectively engaging an outer portion of the second side portion to force the cradle to rotate about the first side portion pivot for enabling the off-loading of the decorative article roll.

In an embodiment, the decorative article delivery device further comprises a mechanical brake mounted with respect to the bed. The brake may be a truck lock or jack.

In another embodiment, the decorative article delivery device further comprises at least one battery in communication with the two electric motor units.

In another aspect, the present disclosure pertains to a product delivery device that comprises a planar, rectangular bed having first and second ends; two passive casters mechanically attached to the underside of the bed at the first end thereof, each of the passive casters configured to be freely rotatable about a respective vertical axis; two driven casters mechanically attached to the underside of the bed at the second end thereof, each of the driven casters configured to not rotate about a respective vertical axis; two electric motor units, each in communication with a respective one of the two driven casters, for selectively driving the respective caster in response to a control signal; a control handle mechanically communicating with the bed and being in electrical communication with the two electric motor units for selectively conveying the control signal thereto; and a pair of chocks in mechanical communication with the bed for receiving the product therein, each chock comprising a first arcuate side and a second vertically planar side, each chock being selectively, mechanically connected to opposite sides of the bed with the first or second side thereof facing the other chock.

In an embodiment, the product delivery device further comprises a plate intermediate the chocks and the bed, the plate having a plurality of mechanical features for selective engagement with the chocks for enabling the lateral placement of the chocks across the width of the bed.

In another embodiment, the product delivery device further comprises a lateral pivot intermediate the plate and the bed for enabling the plate to be rotated with respect to the bed for facilitating the off-loading of product from the plate.

In yet another embodiment, the product delivery device further comprises an off-loading lever mechanically connected to the bed via a lateral pivot for selectively rotating the plate with respect to the bed.

Further still, in an embodiment, the product delivery device further comprises a mechanical brake mounted with respect to the bed. The brake may be a truck lock or jack.

In an embodiment, the product delivery device further comprises at least one battery in communication with the two electric motor units.

In another embodiment, the decorative article delivery device comprises (a) a housing; (b) at least two outriggers attached to a lower surface of the housing and protruding from the housing, each outrigger comprising two passive casters mechanically attached to the underside of each outrigger at the first end thereof, each of the passive casters configured to be freely rotatable about a respective vertical axis; and two driven casters mechanically attached to the underside of at a second end thereof, each of the driven casters configured to not rotate about a respective vertical axis; (c) an adjustable rolled decorative article holder attached to the housing; (d) a locking and adjusting element attached to the adjustable decorative article holder; and (e) a lock and release element attached to the locking and adjusting element; and (f) at least one handle attached to a surface of the housing.

In another embodiment, the casters are removably or integrally attached to the underside of the outriggers.

In another embodiment, the outriggers are substantially parallel to each other.

In another embodiment, the casters have a battery and electric motor associated therewith.

In another embodiment, the decorative delivery device further comprises a brake.

In another embodiment, the locking and adjusting element comprises a foot pump or a hydraulic lift.

In another embodiment, the handle comprises an electrical control for the casters wherein the control comprises a variable motor speed control, a speed more control, an on/off switch, a horn, an emergency stop control, and/or a battery-life indicator.

In another embodiment, the decorative delivery device further comprises a pivotable plate and/or a cradle.

In another embodiment, the decorative delivery device further comprises one or more sensors.

### BRIEF DESCRIPTION OF THE DRAWINGS

Fig. 1A is a first end view of a decorative article delivery device according to the present disclosure;
Fig. 1B is a side view of the decorative article delivery device of Fig. 1A;
Fig. 1C is a second end view of the decorative article delivery device of Fig. 1A;
Fig. 2A is a first end view of a first alternative embodiment of the decorative article delivery device of Fig. 1A;
Fig. 2B is a first end view of a second alternative embodiment of the decorative article delivery device of Fig. 1A;
Fig. 2C is a partial first end view of an alternative configuration of the second alternative embodiment of the decorative article delivery device of Fig. 2B; and
Fig. 3 is a first end view of an alternative configuration of the first alternative embodiment of the decorative article delivery device of Fig. 2A.
Fig. 4A is one view of an embodiment of the decorative article delivery device.
Fig. 4B is another view of an embodiment of the decorative article delivery device.
Fig. 4C is another view of an embodiment of the decorative article delivery device.
Fig. 4D is another view of an embodiment of the decorative article delivery device.
Fig. 4E is another view of an embodiment of the decorative article delivery device.

### DETAILED DESCRIPTION OF EXEMPLARY EMBODIMENTS

Distribution facilities from which decorative articles in rolled form are sourced and major retail establishments to which such materials are delivered may be provided with loading docks especially configured for loading and unloading the materials to and from trucks or tractor trailers. For example, these facilities are typically provided with floors that are substantially level with the vehicle beds and that are smooth for easy rolling of forklifts, lift trucks with a pole attachment, or palette jacks. However, many smaller retailers receiving bulk decorative articles do not have specially configured loading docks for facilitating the off-loading and movement of these materials. Roll carrier trolleys or dollies are two wheeled frames configured to receive the decorative articles that are in the rolled form (also referred to as "rolled decorative articles"), but these must be manually and awkwardly moved. This movement may be a challenge if the ground over which the materials must be moved is formed of gravel, pitted, or covered with contaminants such as dirt, ice or snow. Manual manipulation of such bulky items may also expose operators to risk of injury.

The decorative article delivery device (also referred to as "delivery device") of the present disclosure provides a powered conveyance that is light weight and compact and is particularly configured to securely receive bulky items, such as rolled decorative articles. The decorative article delivery device is configured to be easily manipulated despite the weight and configuration of the materials carried and configured to facilitate the targeted delivery of such materials, thereby minimizing the risk of physical injury to the attendant operators, to prevent damage to the goods being manipulated and to enable the delivery to facilities heretofore unserved due to the lack of proper delivery environments. Said conveyance is designed (dimensions, weight, shape, etc.) such that it is storable in the truck that transports the rolled decorative article without compromising the quantity of rolled decorative articles.

The present disclosure relates to various embodiments of a delivery device 10 that in a first illustrative embodiment is particularly configured for receiving, conveying and delivering rolled decorative articles such as, but not limited to, carpet, vinyl and padding. Other embodiments of the delivery device for receiving, conveying and delivering boxed goods, planks and tiles are also contemplated.

As previously discussed, decorative articles may be manufactured and distributed in large rolls. For example, a typical roll of decorative article described herein may be up to fifteen feet long, a foot or more in diameter, and may weigh up to twelve hundred pounds. Other dimensions and weights are possible. In one example, the rolled decorative article may be 8-12 feet in length, greater than 1 foot in diameter, and 800-1200 pounds. In some examples, the weight of the rolled decorative article may be 150-1400 pounds. In one or more examples, the weight, diameter, and/or the length of the rolled decorative article may be such that the rolled decorative article is inconvenient or substantially challenging for a single or multiple average sized humans to maneuver in a safe manner (bodily safety and/or safety of surrounding structures/materials). The presently disclosed delivery device 10 facilitates the conveyance of such products in environments lacking facilities such as loading docks particularly configured for off-loading materials from vehicles such as trucks and tractor trailers (e.g., in dense urban areas, cities, rural areas with minimal infrastructure, small retail locations or warehouses, etc.).

The term "decorative article" and/or "rolled decorative article" and/or "rolled good" as used herein refers to flooring products or materials such as, but not limited to, carpets, padding, sheet vinyl goods, etc., that are typically transported and stored in a rolled form. The terms "decorative article" or "rolled decorative article" or "rolled good is interchangeably referred to as carpet, flooring product, or flooring material, or flooring element, or other rolled articles (e.g., large, heavy, and/or unwieldy rolled articles) for example. It is noted that while the term "decorative article" is used, the article has functional use and features and is not limited to the aesthetic feature of the article. For example, the decorative article is used to cover a substructure, like a floor, to provide better acoustic in a room, underfoot comfort, wear and tear features, water-resistance or waterproof features, etc.

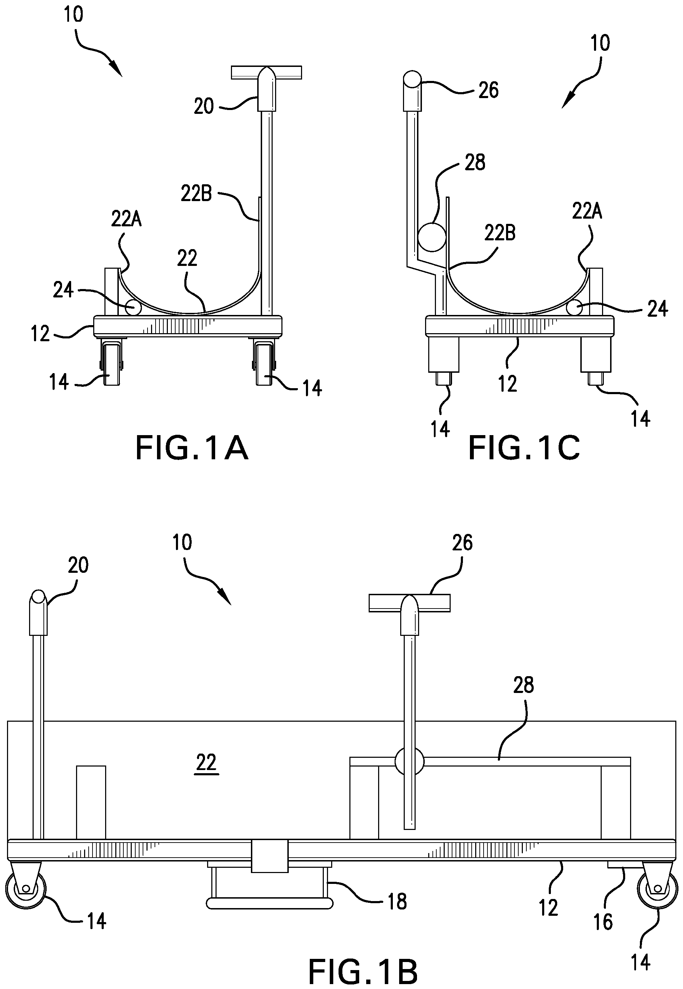

With reference to Figs. 1A-1C, the delivery device 10 includes a bed 12, which in a first embodiment is a rectangular plane typically oriented parallel to the ground. The shape of the bed 12 is not limited to rectangular and can be any shape that is convenient, such as square, round, oval and the like. Disposed underneath the bed 12 are casters 14. In a first embodiment, there is one caster 14 proximate to and underneath a respective corner of the bed 12. While all four casters 14 may be free to pivot about a respective vertical axis, in one embodiment, two of the casters 14 at one end of the bed 12 are axially fixed and the other two casters 14 at the opposite end of the bed 14 are rotatable about the respective vertical axis.

At least one of the casters 14 is a self-powered, driven caster 14 while the other casters 14 are passive casters 14. In one embodiment, there are two driven casters 14 and two passive casters 14, and the driven casters 14 are rotationally fixed with respect to the bed 12 while the passive casters 14 are free to pivotally rotate about a respective vertical axis. In some examples, the driven casters 14 may be free to rotate about a respective vertical axis and may be locked in a desired rotated position. For example, the driven casters 14 may be individually rotatable about a vertical axis and once they are rotated to a desired direction (angle or position) or they may be locked at the desired direction after which they may be powered to move in the set direction. In some examples, the passive casters 14 may also be freely rotatable about a vertical axis and lockable (or can be fixed) at a desired direction.

For example, each driven caster 14 has associated therewith a battery and electric motor unit 16, as seen in Fig. 1B. Alternatively, each driven caster 14 has a respective electric motor unit and the two driven casters 14 share a single battery. It is understood that reference to a battery may include a battery pack comprised of plural individual battery cells, such as 18 volt batteries. One or more interfaces to sources of recharging power are provided with respect to the battery. In some examples, the motors associated with the driven casters 14 may be hydraulic motors. In some examples, the motors associated with the driven casters 14 may be electrically controlled (e.g., electric motor unit 16) as described above, whereas in other examples, the motors may be mechanically controlled.

Each electric motor unit 16 provides a range of rotational rates for the respective caster 14 and may also provide a degree of braking action. However, the illustrated embodiment of Fig. 1B also includes an optional brake 18 in the form of a truck lock or jack. A truck lock is a spring-biased pad that may be actuated by downward pressure of an operator's foot on an associated lever. This forces a pad of the truck lock to be pushed downward into contact with the floor or ground under the bed 12 for holding the delivery device 10 in place.

However, in environments in which the ground or floor is not truly horizontal, in one embodiment, a jack can be employed as the brake 18 for the delivery device 10. A jack is also a spring-biased pad that is selectively actuatable as with respect to the truck lock. However, the range of vertical motion of the jack is greater, such that at least one caster 14 of the delivery device is raised off the ground or floor.

The brake 18 is also provided with a mechanical release mechanism that is actuatable by the foot of an operator, in one embodiment, for causing vertical movement of the pad, out of contact with the ground or floor.

Control over the movement of the delivery device 10 may be implemented through the use of a control handle 20. This handle 20 provides various controls in electrical communication or in wireless communication with the electric motors 16 of the driven casters 14. The control handle 20 may include a variable motor speed control, a speed mode control for selecting, for example, a range of slow speeds versus a range of fast speeds, an on/off switch, etc. The control handle 20 may also include an indicator of battery charge state, as well as safety related functions including a horn and an emergency stop control. The latter may be provided as an actuator positioned such that if the delivery device 10 pushes against an operator or obstacle, the actuator is activated and power to the electric motors is interrupted.

The control handle 20 is also mechanically connected to the bed 12. This mechanical connection may include off-vertical axis tilt as well as rotation about a vertical axis through the point of connection with the bed. Thus, while the driven casters 14 selectively provide motive power, an operator may use the control handle 20 to steer the delivery device 10, and, if required, may also provide physical force for moving or braking the delivery device 10. Spring biasing or other mechanical elements may be provided to bias the control handle 20 into a substantially vertical rest position.

In the delivery device 10 embodiment of Figs. 1A-1C, disposed atop the bed 12 is a cradle 22. As seen in the end views of Figs. 1A and 1C, the cradle 22 has a frusto-cylindrical cross-section with a lower extent in contact with an upper surface of the bed and partial upwardly curving side portions 22A, 22B. The radius of the cradle is selected to accommodate the flooring product or other goods to be borne therein, in one embodiment.

While the side portions of the cradle 22A, 22B may extend to the same or a similar vertical height with respect to the bed 12, in the illustrated embodiment, one side of the cradle 22A is lower than the other, higher side 22B. In this embodiment, an outer portion of the lower side is rotatably attached to the bed via a horizontal pivot 24. Proximate the higher side is an off-loading lever 26 in mechanical communication with the bed via a horizontal pivot 28. When it is desired to off-load the flooring product, an operator may pull the off-loading lever in an arcuate and downward direction, away from the delivery device 10. As the lever rotates about the respective pivot, a lower extent of the lever presses against an outer surface of the cradle higher side 22B. This forces the cradle to rotate about the lower side pivot, thereby enabling the flooring product to roll out of the cradle onto the ground or floor next to the delivery device, or onto some other desired receiving surface. Once the flooring product is so delivered, the lever is returned to a vertical rest position, either under spring bias or as a result of the weight of the cradle pushing the lower extent of the lever back into a rest position.

In other embodiments, the mechanical off-loading lever is replaced with driven means such as an electrically driven, motorized lift.

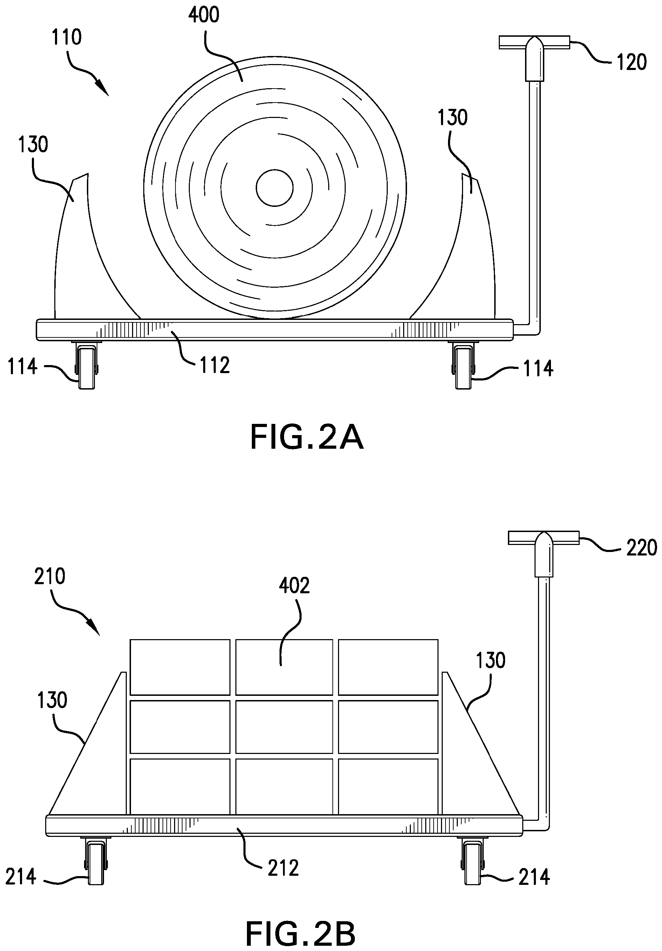

In alternative embodiments, the delivery device bed is provided with mechanical means for engaging a variety of different cargo supports. In Fig. 2A, a delivery device 110 has a bed 112, passive and driven casters 114, and a control handle 120 as described with respect to the delivery device 10 of Figs. 1A-1C. However, in place of the cradle 22 of that embodiment, the delivery device of Fig. 2A is provided with a pair of parallel, curved chocks 130 that are in selective mechanical engagement with the respective bed. Thus, for a flooring product roll of large diameter, the curved chocks may be locked into place on an upper surface of the bed at a first, wider lateral position. For a flooring product roll of small diameter, the curved chocks may be locked into place at a second, smaller lateral position.

With respect to Fig. 2B, a delivery device 210 has a bed 212, passive and driven casters 214, and a control handle 220 as described with respect to the delivery device 10 of Figs. 1A-1C. In this embodiment, the pair of curved chocks 130 of Fig. 2A may be reconfigured to present a flat inward surface. In this configuration, articles such as boxed or packaged goods, planks or tiles may be carried atop the respective bed 212, with the distance between the chocks being adjustable according to the width of the product(s) being carried. Alternatively, in this embodiment, the curved chocks may be replaced with other chocks especially shaped for use with rectangular solid articles.

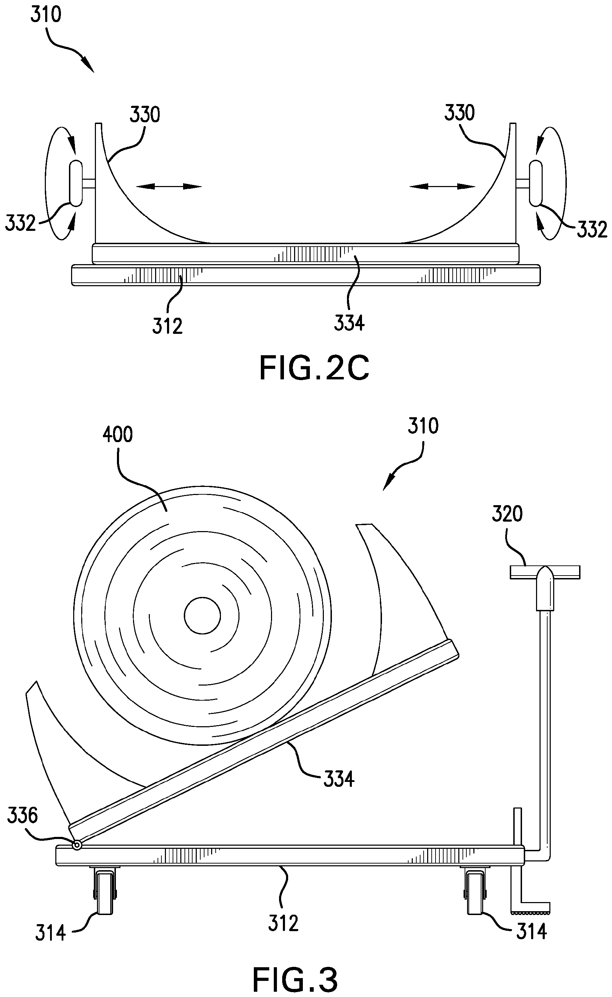

In Fig. 2C, a further embodiment includes a delivery device 310 having a bed 312. This embodiment includes a pair of adjustable chocks 330, each having a respective positioning handle 332. The adjustable chocks are shown in mechanical communication with a plate 334 that is itself in mechanical communication with the bed. The plate and adjustable chocks are provided with mutually cooperating mechanical features that enable the chocks to be laterally repositioned, with respect to the width of the delivery device, as each respective positioning handle is rotated clockwise or counterclockwise. For example, the plate may include a lateral slot having one side lined with inwardly projecting teeth. Each chock may have a gear extending down into the slot. The gear is disposed upon a vertical rod within the chock which is driven by rotational operation of the handle. Thus, rotation of the handle results in the gear rotating and traveling along the rack of teeth within the slot. Various sized rolled flooring products may thus be accommodated.

In further embodiments, the plate 334 of Fig. 2C may be incorporated into the embodiments of Figs. 2A and 2B to facilitate mechanical interaction with the reconfigurable chocks. Incorporation of the plate into the embodiment of Fig. 2C enables the offloading of a rolled flooring product 400 through the use of a lateral pivot 336 disposed intermediate the plate and the bed 312, as shown in Fig. 3. While not shown in this embodiment, an offloading lever with respective pivot may also be incorporated.

In the foregoing embodiments, the delivery device overall dimensions may be approximately four to six feet long and approximately three feet wide. At least the bed and cradle may be provided of aluminum for weight savings. The weight savings allow the delivery device to be placed in the delivery trucks while still meeting the weight stipulations of the Department of Transportation (DoT). Further, the compact dimensions allow the delivery device to be placed within the delivery truck without taking up a lot of flooring product cargo or holding space.

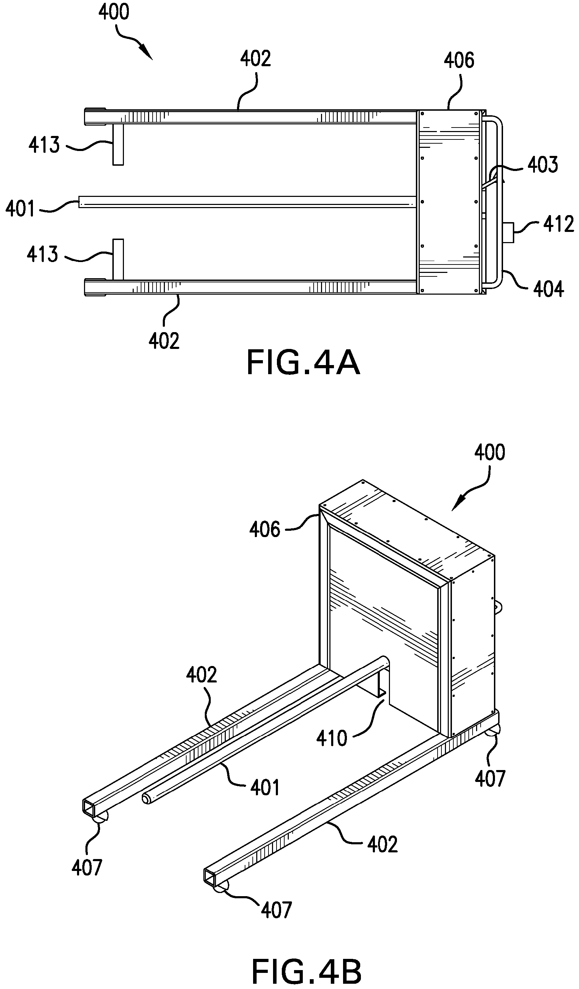

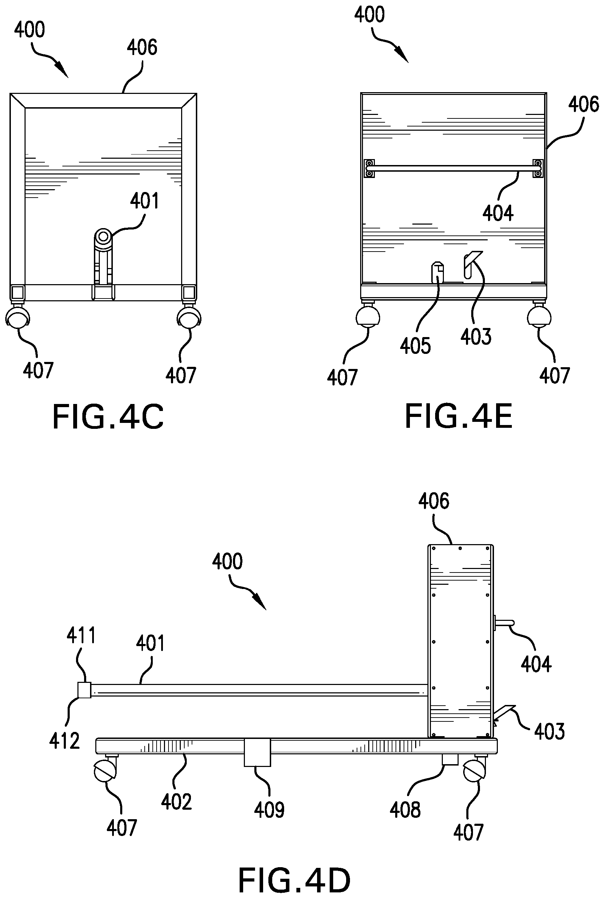

In another embodiment, the flooring product delivery device 400 of Figs. 4A, 4B, 4C, 4D, and 4E (collectively Fig. 4), which are different views of the decorative article delivery device 400. The delivery device 400 may include a housing 406. Further, the delivery device 400 comprises at least two outriggers 402 attached to a lower surface of the housing 406, each outrigger 402 comprising casters 407 that can be removably or integrally attached on the underside of the outriggers 402. The outriggers 402 may be substantially parallel to each other.

Two of said casters 407 are passive casters 407 mechanically attached to the underside of each outrigger 402 at the first end thereof, each of the passive casters 407 configured to be freely rotatable about a respective vertical axis; and the other two of said casters 407 may be driven casters 407 mechanically attached to the underside of at a second end thereof, each of the driven casters 407 configured to not rotate about a respective vertical axis. In some embodiments, the second side may be the rear side of the delivery device 400 (i.e., side closer to the housing 406) and the first side may be the front side that is away from the housing 406. However, in other examples, the second side may be the front side and the first side may be the rear side. In some examples, the driven casters 407 may be free to rotate about a respective vertical axis and may be locked in a desired rotated position. For example, the driven casters 407 may be individually rotatable/adjustable about a vertical axis and once they are rotated to a desired direction (angle or position), they may be locked at the desired direction after which they may be powered to move in the set direction. In some examples, the passive casters 407 may also be freely rotatable about a vertical axis and lockable (or can be fixed) at a desired direction.

In one example, each driven caster 407 of the delivery device 400 has associated therewith a battery and electric motor unit 408 shown in Fig. 4D. Alternatively, each driven caster has a respective electric motor unit and the two driven casters share a single battery. It is understood that reference to a battery may include a battery pack comprised of plural individual battery cells, such as 18 volt batteries. One or more interfaces to sources of recharging power are provided with respect to the battery. In some examples, the batteries may be recharged by converting the kinetic energy generated from rolling the passive casters 407.

In some examples, the motors associated with the driven casters may be hydraulic motors. In some examples, the motors associated with the driven casters may be electrically controlled (e.g., electric motor unit 408) as described above, whereas in other examples, the motors may be mechanically controlled.

Each electric motor unit 408 provides a range of rotational rates for the respective caster 407, in one embodiment, and may also provide a degree of braking action. However, as illustrated in Fig. 4D,the delivery device 400 may also include an optional brake 409 in the form of a truck lock or jack without departing from a broader scope of the present disclosure.

Further, the delivery device may include an adjustable decorative article holder 401 attached to the housing 406, a locking and adjusting element 403 coupled to the adjustable decorative article holder 401, and a lock and release element 405 coupled to the locking and adjusting element 403. The locking and adjusting element 403 may be configured to vertically adjust the adjustable decorative article holder 401 along or within the recess 410 formed in the housing from a first position to a second position, and the lock and release element 405 may be configured to lock the adjustable decorative article holder 401 at the first position, second position, or any other intermediate position in between the first and second position.

In one embodiment, the locking and adjusting element 403 can be a foot pump or a hydraulic lift pump. In some example embodiments, the locking and adjusting element 403 and the lock and release element 405 may be optional. The adjustable decorative article holder 401 may be electrically/electronically controlled using motors or other control elements that can adjust the adjustable decorative article holder 401 from a first position to a second position and back as needed and lock the holder 401 at the first position, second position, or any other intermediate position in between the first and second position. At the first position, the holder 401 may be located adjacent the bottom of the recess 419 closer to the outriggers 402 and at a second position, the holder 401 may be located adjacent the top of the recess 419 away (vertically separated) from the outriggers 402.

In one example, the holder 401 may be placed in the first position or between the first and second positions to load and/or unload the rolled flooring product onto the holder 401. In this embodiment, once the rolled flooring product is securely loaded onto the holder 401, the holder 401 may be adjusted to the second position or between the first and second positions for transporting (after loading and/or unloading). The intermediate position between the first and second positions at which the holder 401 may be placed for loading/unloading and transporting may be the same position or different positions.

Furthermore, the delivery device 400 may include at least one handle 404 attached to a surface of the housing 406. The handle may be used to push, pull, or maneuver the delivery device 400. In some examples, a control 412 for the driven casters 407, and the holder 401 (if holder is controlled electronically) may be mounted on the handle 404 or may be integral to the handle 404. In some examples, handle 404 may be configured to be adjustable such that the driven casters 407 and/or the holder 401 (if controlled using mechanism alternative to the elements 403, 405) may be controlled by adjusting the handle 404. This handle 404 may provide various controls 412 in electrical communication or in wireless communication with the driven casters 407 (or motors/other controls associated therewith) and/or the holder 401 (controls associated therewith). The controls 412 may include a variable motor speed control, a speed mode control for selecting, for example, a range of slow speeds versus a range of fast speeds, an on/off switch, and other useful controls. The handle 404 may also include an indicator of battery charge state, as well as safety-related functions including a horn and an emergency stop control. The latter may be provided as an actuator positioned such that if the delivery device pushes against an operator or obstacle, the actuator is activated and power to the electric motors is interrupted.

Even though Fig. 4 illustrates an example housing 406 and handle 404, it is noted that in some examples, the housing 406 and handle 404 of the delivery device 400 may be replaced by the control handle 20 shown in Figures 1-3 without departing from a broader scope of the present disclosure. Said control handle 20 may be mechanically connected to the housing 406, where the mechanical connection may include off-vertical axis tilt as well as rotation about a vertical axis through the point of connection with the bed.

In some examples, the outriggers 402 of the delivery device 400 may be replaced or additionally provided with the pivotable plate 334 with chokes (130, 330) or a cradle 22 as shown in Figures 1-3 without departing from a broader scope of the present disclosure.

In one example, the outriggers 402 are configured such that the length thereof is flush with or exceeds/ extends past the distal end 411 of the holder 401 to provide stability when loaded. Further, in some examples, the holder 401 would extend more than half of the length of any rolled good. In some examples, the holder 401 may be hollow whereas in another example, the holder 401 may be solid. The diameter of the holder 401 may be selected such that it is smaller than the inner diameter (core) of the rolled flooring product. In one example, the diameter of the holder 401 may be less than 4 inches. In one example, the diameter of the holder 401 may be 3.25-3.75 inches (both ends of the ranges included). The width of the delivery device 400 measured from the outer end of one outermost outrigger 402 to the outer end of the other outermost outrigger 402 may be such that the delivery device can be placed within the delivery truck without taking up a lot of flooring product cargo or holding space. In one example, the width of the delivery device 400 measured from the outer end of one outermost outrigger 402 to the outer end of the other outermost outrigger 402 may be greater than or equal to 2 feet. The outermost outriggers 402 may be spaced (space between outermost outriggers) such that the diameter of the rolled flooring product can be comfortably accommodated therebetween (e.g., 2 times the diameter of the rolled flooring product). Further, the width of each outrigger 402 may be 3-5 inches. In some examples, the width of each outrigger may be 4 inches. In some examples, the width of the outriggers 402 may be selected to provide stability to the delivery device and to accommodate the placement of the casters 407. In some examples, the shape and the construction of the housing 406 may be such that a center of gravity of the delivery device 400 is closer to the ground and the aft (rear) end of the delivery device (towards the housing 406) especially when the rolled good is loaded onto the holder. Such a construction provides stability to the delivery device 400 and prevents tipping of the device 400 and for the safety of the operator.

In another example, the delivery device 400 overall dimensions may be approximately 4-6 feet long and equal to or less than 4 feet wide. The frame of the delivery device 400 may be provided of aluminum for weight savings. The weight savings allow the delivery device to be placed in the delivery trucks while still meeting the weight stipulations of the Department of Transportation (DoT).

In some examples, the delivery device 400 may include one or more fork elements 413 (flat, blade-like elements) or other assist elements attached to the housing 406 and located in between the outriggers 402 to assist the loading of the rolled goods onto the holder 401 without requiring the operator to handle the rolled good.

In some examples, the delivery device 400 may include one or more sensors 411 at the distal ends thereof (e.g., distal end of holder 401 or outriggers 402) to detect and prevent collision hazards and warn the operator and/or control the casters accordingly. Said sensors 411 may include, but are not limited to, distance sensors, image sensors, and/or cameras. In some examples, the handle 404 may also include visual, auditory, or haptic cues that will inform the operator that the rolled good has been loaded and is safe to move the delivery device 400 or that the rolled good has been unloaded.

In one example, for loading a rolled good, the operator may use the handle 404 and/or controls 412 on the handle 404 to maneuver the delivery device 400 such that the delivery device 400 is in front of the rolled good and the rolled good is positioned substantially between the outriggers 402. Then, the holder 401 may be adjusted to align with the inner diameter or core of the rolled good. Then, using the driven casters 407, the delivery device 400 is moved forward such that the holder 401 is inserted into the inner diameter or core of the rolled good. Once the rolled good is securely loaded onto the holder 401, the operator may raise the holder 401 to clear the rolled good from the ground. Then, the operator may use the controls 412 and/or handle 404 to drive transport the delivery device 400 using the driven casters 407 to the destination/target location. To unload the rolled good, the operator may lower the holder 401 so that at least a portion of the rolled good rests on the ground. Then, using the controls 412 and/or the handle 404, the operator may move the delivery device backwards till the holder 401 is out of the inner diameter or core of the rolled good. The controls 412 used to control the casters 407 and/or the holder 401 (in some examples that don't use the foot pedal and brake mechanism) are either low voltage electrical/electronic controls, mechanical levers, or electromechanical solution. The controls 412 are most likely located within the body or within a supplemental enclosure mounted to the body.

Alternative embodiments of the subject matter of this application will become apparent to one of ordinary skill in the art to which the present invention pertains, without departing from its spirit and scope. It is to be understood that no limitation with respect to specific embodiments shown here is intended or inferred.
The following numbered paragraphs define particular embodiments of the present invention:
1. A decorative article delivery device comprising:
   a planar bed having first and second ends;
   two passive casters mechanically attached to an underside of the bed at the first end thereof, each of the passive casters configured to be freely rotatable about a respective vertical axis;
   two driven casters mechanically attached to the underside of the bed at the second end thereof, each of the driven casters configured to not rotate about a respective vertical axis;
   two electric motor units, each in communication with a respective one of the two driven casters, for selectively driving the respective caster in response to a control signal;
   a control handle mechanically communicating with the bed and being in electrical communication with the two electric motor units for selectively conveying the control signal thereto;
   a cradle in mechanical communication with the bed for receiving the decorative article therein, the cradle comprising a frusto-cylindrical member having an arcuate portion disposed proximate the bed and first and second upwardly curving side portions, the first side portion being pivotally connected to the bed along a lateral pivot; and
   an off-loading lever mechanically connected to the bed via a lateral pivot for selectively engaging an outer portion of the second side portion to force the cradle to rotate about the first side portion pivot for enabling an off-loading of the decorative article.
2. The decorative article delivery device of paragraph 1, further comprising a mechanical brake mounted with respect to the bed.
3. The decorative article delivery device of paragraph 2, wherein the brake is a truck lock or jack.
4. The decorative article delivery device of paragraph 1, further comprising at least one battery in communication with the two electric motor units.
5. A product delivery device comprising:
   a planar bed having first and second ends;
   two passive casters mechanically attached to the underside of the bed at the first end thereof, each of the passive casters configured to be freely rotatable about a respective vertical axis;
   two driven casters mechanically attached to an underside of the bed at the second end thereof, each of the driven casters configured to not rotate about a respective vertical axis;
   two electric motor units, each in communication with a respective one of the two driven casters, for selectively driving the respective caster in response to a control signal;
   a control handle mechanically communicating with the bed and being in electrical communication with the two electric motor units for selectively conveying the control signal thereto; and
   a pair of chocks in mechanical communication with the bed for receiving the product therein, each chock comprising a first arcuate side and a second vertically planar side, each chock being selectively, mechanically connected to opposite sides of the bed with the first or second side thereof facing an other chock.
6. The product delivery device of paragraph 5, further comprising a plate intermediate the chocks and the bed, the plate having a plurality of mechanical features for selective engagement with the chocks for enabling a lateral placement of the chocks across the width of the bed.
7. The product delivery device of paragraph 6, further comprising a lateral pivot intermediate the plate and the bed for enabling the plate to be rotated with respect to the bed for facilitating an off-loading of product from the plate.
8. The product delivery device of paragraph 7, further comprising an off-loading lever mechanically connected to the bed via a lateral pivot for selectively rotating the plate with respect to the bed.
9. The product delivery device of paragraph 5, further comprising a mechanical brake mounted with respect to the bed.
10. The product delivery device of paragraph 9, wherein the brake is a truck lock or jack.
11. The product delivery device of paragraph 5, further comprising at least one battery in communication with the two electric motor units.

## Claims

1. A decorative article delivery device comprising:
(a) a housing;
(b) at least two outriggers attached to a lower surface of the housing, each outrigger comprising two passive casters mechanically attached to the underside of each outrigger at a first end thereof, each of the passive casters configured to be freely rotatable about a respective vertical axis; and two driven casters mechanically attached to the underside of at a second end thereof, each of the driven casters configured to not rotate about a respective vertical axis;
(c) an adjustable decorative article holder attached to the housing;
(d) a locking and adjusting element attached to the adjustable decorative article holder; and
(e) a lock and release element attached to the locking and adjusting element; and
(f) at least one handle attached to a surface of the housing.

2. The decorative delivery device of claim 1, wherein the casters are removably or integrally attached to the underside of the outriggers.

3. The decorative delivery device of claim 1, wherein the outriggers are substantially parallel to each other.

4. The decorative delivery device of claim 1, wherein the casters have a battery and electric motor associated therewith.

5. The decorative delivery device of claim 1, further comprising a brake.

6. The decorative delivery device of claim 1, wherein the locking and adjusting element comprises a foot pump or a hydraulic lift.

7. The decorative delivery device of claim 1, wherein the handle comprises an electrical control for the casters wherein the control comprises a variable motor speed control, a speed motor control, an on/off switch, a horn, an emergency stop control, and/or a battery-life indicator.

8. The decorative delivery device of claim 1, further comprising a pivotable plate and/or a cradle.

9. The decorative delivery device of claim 1, further comprising one or more sensors.
